# EUROPÄISCHE PATENTSCHRIFT

(11) **EP 2 941 676 B1**
(45) Veröffentlichungstag und Bekanntmachung des Hinweises auf die Patenterteilung: **10.06.2020**
(21) Anmeldenummer: 13802352.8
(22) Anmeldetag: 06.12.2013
(51) Int. Cl.: G05B 19/042

(54) **BETRIEBSELEKTRONIK FÜR EIN PROZESSGERÄT SOWIE VERFAHREN ZUM BETREIBEN DERSELBEN**
OPERATING ELECTRONICS FOR A PROCESS DEVICE AND METHOD FOR OPERATING THE ELECTRONICS
ÉLECTRONIQUE DE SERVICE DESTINÉE À UN APPAREIL DE TRAITEMENT ET PROCÉDÉ PERMETTANT DE FAIRE FONCTIONNER CELLE-CI

(30) Priorität: 21.12.2012 DE 102012113047
(43) Veröffentlichungstag der Anmeldung: 11.11.2015
(73) Patentinhaber: Endress+Hauser Wetzer GmbH+Co. KG, 87484 Nesselwang (DE)
(72) Erfinder: LUGLI, Roberto, I-20090 Segrate (IT); KORN, Michael, 87616 Marktoberdorf (DE)
(74) Vertreter: Andres, Angelika Maria
(86) Internationale Anmeldenummer: PCT/EP2013/075771
(87) Internationale Veröffentlichungsnummer: WO 2014/095420

(56) Entgegenhaltungen:
- EP-A1- 2 439 711
- WO-A1-2009/138315
- DE-A1-102009 014 252
- US-A1- 2005 168 343

## Beschreibung

Die Erfindung bezieht sich auf eine Betriebselektronik für eine Prozessvorrichtung, eine Prozessvorrichtung, ein Verfahren zum Betreiben der Prozessvorrichtung, ein Computerprogrammprodukt und auf die Verwendung des Verfahrens.

Aus dem Stand der Technik ist aus der EP 2274656 A1 eine Vorrichtung zur Erhöhung der funktionalen Sicherheit durch Überwachung des in einer Zwei-Leiter-Stromschleife eingestellten Stroms bekannt geworden. Dafür ist eine Auswerteeinheit vorgesehen, die den durch den Stromregler in der Zwei-Leiter-Stromschleife eingestellten Strom überwacht. Im Falle eines Defekts verläßt der Stromregler (OPV) seinen Arbeitsbereich, um bspw. einen Leckstrom auszugleichen. Dies kann durch die Auswerteeinheit detektiert und ein entsprechendes Fehlersignal initiert werden.

Dabei ist es jedoch von Nachteil, dass ein Fehler in der Betriebselektronik selbst nicht erkannt werden kann, sondern nur überprüft wird, ob das ausgegebene Signal auch in der Stromschleife eingestellt wurde.

Die DE 10 2009 014252 A1 offenbart ein gestaffeltes Verfahren zur Spannungsversorgung eines Feldgerätes. Zwei hintereinandergeschaltete Spannungsregler mit unterschiedlichen Ausgangsspannungen erlauben es, die Spannungsversorgung auch im Worst-Case sicherzustellen, da der zweite Spannungsregler enger toleriert werden kann.

Die US 2005/168343 A1 offenbart eine Prozessvorrichtung, welche mit einem Zweileiter-Prozessregelkreis koppelbar ist. Die Ausgangsschaltung des Schleifenstroms ist derart konfiguriert, um einen Ausgangsstrom auf den zweiadrigen Prozessregelkreis anzulegen. Die Verifikationsschaltung für den Schleifenstrom ist mit dem zweiadrigen Prozessregelkreis gekoppelt und derart konfiguriert, um Fehler im angelegten Ausgangsstrom zu erkennen. Mindestens ein Teil der Schleifenstromprüfschaltung ist dabei unabhängig von der Schleifenstrom-Ausgangsschaltung.
Der Erfindung liegt somit die Aufgabe zugrunde, auch im Fall eines Fehlers der Betriebselektronik oder in Folge eines erhöhten Strombedarfs der Betriebselektronik, wie bspw, eines daraus resultierenden Spannungsabfalls einen korrekten insbesondere vorgegebenen Wert eines Stroms und/oder einer Spannung in einer Zwei-Leiter-Schleife sicherzustellen.

Die Aufgabe wird erfindungsgemäß durch eine Betriebselektronik für eine Prozessvorrichtung, eine Prozessvorrichtung und ein Verfahren zum Betreiben der Prozessvorrichtung gemäß den unabhängigen Ansprüchen gelöst.

Hinsichtlich der Betriebselektronik wird die Aufgabe durch eine Betriebselektronik für eine Zwei-Leiter-Prozessvorrichtung gelöst, welche Zwei-Leiter-Prozessvorrichtung an eine Zwei-Leiter-Schleife anschliessbar ist, wobei die Betriebselektronik eine Eingangsschaltung und eine mit der Eingangsschaltung verbundene Steuereinheit aufweist, wobei die Eingangsschaltung in einem ersten Betriebsmodus dazu dient, vermittels eines von der Steuereinheit ausgegebenen Steuersignals einen Strom und/oder eine Spannung in der Zwei-Leiter-Schleife einzustellen, und wobei die Eingangsschaltung in einem zweiten Betriebsmodus dazu dient, selbstständig den Strom und/oder die elektrische Spannung in der Zwei-Leiter-Schleife einzustellen und/oder aus der Zwei-Leiter-Schleife zu beziehen. Fall somit die Steuereinheit einen Defekt erleidet oder aus anderen Gründen nicht mehr betrieben werden kann oder ausgeschaltet wurde, kann somit dennoch der reguläre insbesondere einem Standard entsprechende Betrieb der Zwei-Leiter-Stromschleife durch die vorgeschlagenen Betriebselektronik bzw. Eingangsschaltung sichergestellt werden.
Erfindungsgemäß umfasst die Eingangsschaltung ein Stellglied und eine Überwachungseinheit, wobei das Stellglied zum Einstellen des Stroms und/oder der Spannung in der Zwei-Leiter-Schleife dient, wobei die Überwachungseinheit zum Empfangen des Steuersignals von der Steuereinheit dient, und/oder wobei die Steuereinheit zumindest zeitweise, bspw. im ersten Betriebsmodus, elektrisch über die Überwachungseinheit mit dem Stellglied verbunden ist.
Erfindungsgemäß wird der Betriebsmodus der Eingangsschaltung in Abhängigkeit des Steuersignals der Steuereinheit und in Abhängigkeit eines Werts der Versorgungsspannung der Steuereinheit, insbesondere vermittels der Überwachungseinheit, bestimmt.
Erfindungsgemäß weist die Versorgungsspannung zwischen dem Stellglied und der Überwachungseinheit einen ersten Wert auf.
Erfindungsgemäß ist zwischen dem Stellglied und der Überwachungseinheit ein Nebenschluss vorgesehen, der dazu dient, eine Versorgungsspannung mit einem ersten Wert bereit zu stellen.

Erfindungsgemäß umfasst die Eingangsschaltung ferner einen Spannungswandler, der dazu dient, die von dem Stellglied aufgenommen Versorgungsspannung auf einen zweiten Wert zu wandeln.
Erfindungsgemäß weist die Versorgungsspannung zwischen der Spannungswandler und dem Spannungswandler einen zweiten Wert auf.
Erfindungsgemäß weist die Versorgungsspannung zwischen dem Spannungsregler und der Steuereinheit einen dritten Wert auf.

Erfindungsgemäß dient die Überwachungseinheit dazu, anhand des ersten, des zweiten und des dritten Werts der Versorgungsspannung den ersten oder den zweiten Betriebsmodus zu bestimmen.
In einer weiteren Ausführungsform der Betriebselektronik handelt es sich bei der Eingangsschaltung um ein Leistungsmodul, zur Versorgung der Betriebselektronik, insbesondere der Steuereinheit mit elektrischer Energie, und/oder ein Kommunikationsmodul zur Herstellung einer Kommunikation der Betriebselektronik, insbesondere der Steuereinheit, über die Zwei-Draht-Schleife, vorzugsweise zu einer übergeordneten Einheit oder einer anderen Prozessvorrichtung. Bspw. kann es sich bei der vorgeschlagenen Betriebselektronik bzw. der Eingangsschaltung um eine ausschließlich zur Leistungsaufnahme dienenden Schaltung handeln.
In einer weiteren Ausführungsform der Betriebselektronik wird durch die Überwachungseinheit, der Betriebsmodus der Eingangsschaltung bestimmt.
In einer weiteren Ausführungsform der Betriebselektronik umfasst die Eingangsschaltung ferner einen Spannungsregler, insbesondere eine Schalteinheit, umfasst, die zum Regeln und/oder zum Unterbrechen der Spannungsversorgung der Steuereinheit dient, insbesondere zum Unterbrechen der Versorgungsspannung mit der die Steuereinheit mit elektrischer Energie versorgt wird.
In einer weiteren Ausführungsform der Betriebselektronik wird der Strom und/oder die Spannung, die vermittels des Stellglieds aus der Zwei-Leiter-Schleife entnommen wird bzw. in der Zwei-Leiter-Schleife eingestellt wird, vermittels eines von der Überwachungsschaltung vorgegebenen, bspw. pulsweitenmodulierten, Signals, bspw. sowohl während des ersten als auch während des zweites Betriebsmodus, eingestellt.

In einer weiteren Ausführungsform der Betriebselektronik wird im ersten Betriebsmodus ein das Steuersignal oder das Steuerkommando repräsentierender Stromwert und/oder Spannungswert in der Zwei-Leiter-Schleife vermittels der Eingangsschaltung, bspw. eines PWM-Signals, besonders bevorzugt der Überwachungseinheit, eingestellt.

In einer weiteren Ausführungsform der Betriebselektronik wird im zweiten Betriebsmodus ein vorgegebener und in der Eingangsschaltung, vorzugsweise der Überwachungseinheit, hinterlegter Stromwert und/oder Spannungswert in der Stromschleife, bspw. anhand eines PWM-Signals, eingestellt.

In einer weiteren Ausführungsform der Betriebselektronik handelt es sich bei dem von der Eingangsschaltung, insbesondere der Überwachungseinheit, im zweiten Betriebsmodus ausgegebenen, eingestellten bzw. bezogenen Stromwert und/oder Spannungswert um ein Fehlersignal oder ein Alarmsignal.

In einer weiteren Ausführungsform der Betriebselektronik handelt es sich bei dem von der Eingangsschaltung, insbesondere der Überwachungseinheit, im zweiten Betriebsmodus ausgegebenen, eingestellten bzw. bezogenen Stromwert und/oder Spannungswert um einen zuletzt das von der Steuereinheit ausgegebene Steuersignal repräsentierenden Stromwert und/oder Spannungswert handelt.

In einer weiteren Ausführungsform der Betriebselektronik wird im zweiten Betriebsmodus ein Strom und/oder eine Spannung in der Zwei-Leiter-Schleife entsprechend dem Strom und/oder Spannungswert bzw. dem Steuersignal, das in einem vorzugsweise unmittelbar vorhergehenden ersten Betriebsmodus eingestellt wurde, der dem zweiten Betriebsmodus vorrausging, eingestellt wird.

In einer weiteren Ausführungsform der Betriebselektronik löst in dem Fall, dass eine der Versorgungsspannungen einen vorgegebenen Schwellwert überschreitet bzw. unterschreitet, die Überwachungseinheit die Spannungsversorgung der Steuereinheit, insbesondere vermittels des Spannungsreglers, bei dem es sich bevorzugt um eine Schalteinheit handelt, unterbricht und den zweiten Betriebsmodus aus.

In einer weiteren Ausführungsform der Betriebselektronik wird der zweite Betriebsmodus wird solange gehalten, wie die Versorgungsspannung einen vorgegebenen Schwellwert über- oder unterschreitet.

In einer weiteren Ausführungsform der Betriebselektronik wird bei der Inbetriebnahme oder bei einem Neustart des Prozessgerätes die Eingangsschaltung sich in dem zweiten Betriebsmodus befindet bzw. in dem zweiten Betriebsmodus betrieben, bis die Versorgungsspannung, vorzugsweise zwischen der Eingangsschaltung und der Steuereinheit bzw. zwischen dem Spannungswandler und der Schalteinheit, zur Versorgung der Steuereinheit einen vorgegebenen Schwellwert erreicht hat.

In einer weiteren Ausführungsform der Betriebselektronik wird nachdem die Versorgungsspannung den vorgegebenen Schwellwert zum Betreiben der Steuereinheit erreicht hat, die Eingangsschaltung in dem ersten Betriebsmodus betrieben wird.

In einer weiteren Ausführungsform der Betriebselektronik ist die Eingangsschaltung, insbesondere die Überwachungseinheit einen Puffer aufweist indem wenigstens ein von der Steuereinheit gesendetes Steuersignal, bzw. ein dieses Steuersignal repräsentierender Wert gespeichert ist.

In einer weiteren Ausführungsform der Betriebselektronik wird die Überwachungsschaltung das Stellglied derart ansteuert, dass ein Stromwert und/oder ein Spanungswert in der Zwei-Leiter-Schleife eingestellt wird, der dem in dem Puffer befindlichen Wert entspricht.

Hinsichtlich der Prozessvorrichtung wird die Aufgabe durch eine Prozessvorrichtung, insbesondere Messgerät, der Prozessautomatisierungstechnik mit einer Mess- und/oder Betriebselektronik nach einem der vorherigen Ausführungsformen gelöst.

Hinsichtlich des Verfahrens wird die Aufgabe durch ein Verfahren zum Betreiben einer erfindungsgemäßen Prozessvorrichtung gelöst, wobei in einem ersten Betriebsmodus vermittels eines von einer Steuereinheit ausgegebenen Steuersignals ein Strom und/oder eine Spannung vermittels einer Eingangsschaltung in der Zwei-Leiter-Schleife eingestellt bzw. aus der Zwei-Leiter-Schleife bezogen wird, wobei in einem zweiten Betriebsmodus den Strom und/oder die elektrische Spannung selbstständig vermittels der Eingangsschaltung in der Zwei-Leiter-Schleife eingestellt bzw. aus der Zwei-Leiter-Schleife zu bezogen wird.

Ferner gelten die in Zusammenhang mit der Betriebselektronik genannten Ausführungsformen mutatis mutandis für das beanspruchte Verfahren.

Die Erfindung wird anhand der nachfolgenden Zeichnungen näher erläutert. Es zeigt:
Fig. 1: eine erste schematische Darstellung einer Eingangsschaltung,
Fig. 2: eine zweite schematische Darstellung einer Eingangsschaltung.

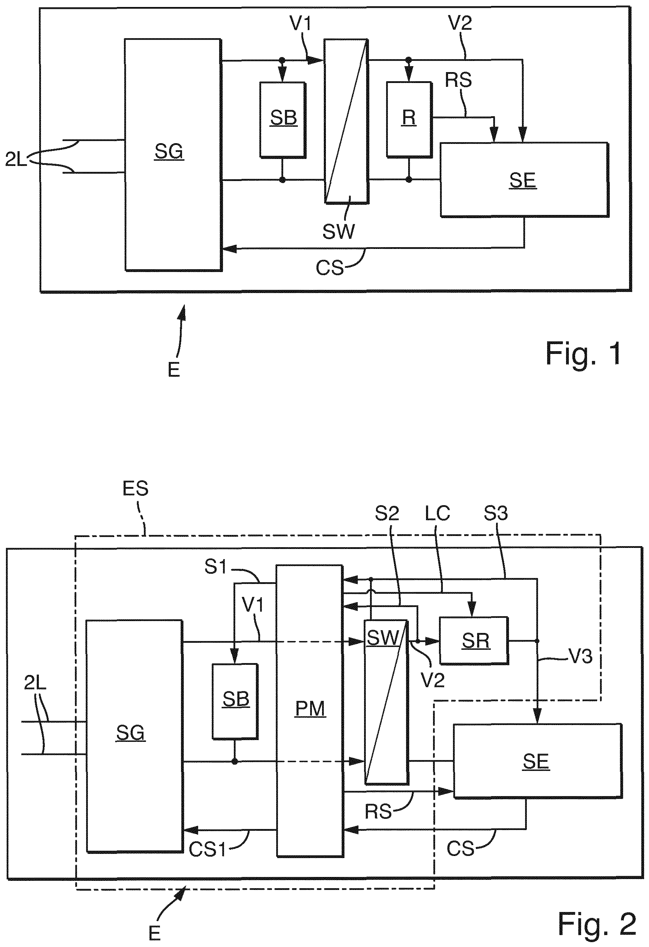

Figur 1 zeigt ein Stellglied SG das an eine Zwei-Leiter-Schleife 2L angeschlossen ist. Über das Stellglied SG kann bspw. ein Strom, d.h. ein bestimmter Wert eines Stroms in der Zwei-Leiter-Schleife 2L eingestellt werden.

Derartige Zwei-Draht-Schleifen 2L oder -Leitungen werden verbreitet in industriellen Anwendungen verwendet, um daran angeschlossene Geräte mit elektrischer Energie zu versorgen. Diese Zwei-Draht-Leitungen 2L dienen also als Versorgungsleitungen, auch die auch als Versorgungsbus bezeichnet werden. Gleichzeitig werden diese Zwei-Draht-Leitungen 2L als Ausgangskanal genutzt um bspw. vermittels einer Lastmodulation eines daran angeschlossenen Gerätes, wie der vorgeschlagenen Prozessvorrichtung, Informationen wie bspw. prozessrelevante Daten, wie bspw. Messwerte, über die Zwei-Draht-Schleife 2L zu übermitteln. Derartige Geräte werden daher auch als Zwei-Draht-Messumformer oder-Transmitter oder allgemein als Prozessvorrichtungen bezeichnet. Bspw. kann ein aus der Zwei-Draht-Schleife 2L über Anschlüsse bezogener Strom genutzt werden, um Informationen in analoger Form bspw. in Form eines 4-20 mA-Signals zu übertragen oder um auf einem analogen Trägersignal eine digitales Kommunikationssignal zu überlagern, wie bspw. beim Profibus-PA, Foundation Fieldbus oder HART-Protokoll.

Da diese Geräte direkt von der Zwei-Leiter-Schleife 2L mit versorgt werden darf der mittlere Strom in der Zwei-Draht Schleife oder in den Zwei-Draht-Leitungen nicht unter einen Mindestwert fallen, der zum Betreiben des Gerätes bzw. der Elektronik des Gerätes dient. Gleichzeit kann aber der vom Gerät verbrauchte Strom kurzzeitig höher sein, als der in der Zwei-Draht-Schleife 2L vorhandene oder bereitgestellte Strom, da bspw. Stromspeicher, wie bspw ein Kondensator, in dem Gerät vorhanden sein können.

In vielen Anwendungen wie bspw. Profibus-PA und Foundation Fieldbus ist es vorgesehen, dass die Zwei-Leiter-Geräte kurz nach dem Hochfahren, d.h. der Versorgung der Geräte mit elektrischer Energie wie bspw. nach dem Anschließen an die Zwei-Draht-Schleife bereits nach wenigen Millisekunden kontrollieren müssen. In der Folge ist es den Geräten zu unter bestimmten Bedingungen gestattet diesen Strom in der Zwei-Draht-Schleife 2L zu ändern. Es ist daher wichtig ein intelligentes Verfahren und eine Vorrichtung anzugeben, die ggf. auftretenden Spannungsabfälle insbesondere in der internen Spannungsversorgung des Gerätes erkennt, da in einem solchen Fall der in der Zwei-Leiter-Schleife 2L eingestellte Strom nicht mehr der Kontrolle des angeschlossenen Gerätes unterliegt. Ähnliches gilt für das Hochfahren eines solchen Gerätes. Es wird also eine Möglichkeit vorgeschlagen, gemäß der stets ein definierter Strom in der Zwei-Leiter-Schleife einstellbar ist.

Gem. Figur 1 wird der Strom in der Zwei-Leiter-Stromschleife 2L durch ein Stellglied SG gesteuert. Dieses Glied SG kann bspw. parallel oder in Reihe zu der Zwei-Draht-Schleife 2L bzw. zu entsprechenden Anschlüssen an der Prozessvorrichtung geschaltet sein. Das Stellglied SG kann bspw. einen Transistor umfassen, der wiederum bspw. über einen Operationsverstärker angesteuert wird, um einen Strom in der Stromschleife 2L einzustellen. Dem Stellglied SG nachgeschaltet, insbesondere parallel zum Stellglied SG, ist ein sog. Nebenschluss SB, zu englisch shunt-block, der dazu dient, den nicht von dem Gerät bzw. der Steuereinheit SE oder anderen Anwendungen des Gerätes benötigen Strom abzuleiten, vorzugsweise bis der gewünschte Stromwert erreicht ist. Es kann sich dabei um ein statisches Bauteil handeln, das -einmal eingebaut- immer den gleichen Stromwert durchlässt oder um ein dynamisches, regel- oder steuerbares Bauteil, das in Abhängigkeit einer entsprechenden Vorgabe, insbesondere zu Laufzeit des Gerätes bzw. der Betriebselektronik E, einen Stromwert V1 durchlassen kann. Über diesen Nebenschluss wird also eine Spannung im Bereich V1 bzw. ein Spannungspegel V1 eingestellt werden.

Als Referenz- oder Steuersignal zum Einstellen eines Stroms in der Zwei-Draht-Schleife 2L wird ein von einer Steuereinheit SE stammendes Steuersignal CS verwendet. Die Steuereinheit SE kann dieses Referenz- oder Steuersignal CS bspw. in Form eines analogen oder digitalen Signals, wie bspw. eines Pulsweitenmodulierten Signals, ausgeben.

Die Steuereinheit SE dient daher zur Erzeugung eines Steuersignals CS und wird im Fall eines Zwei-Leiter-Gerätes von aus der Zwei-Leiter-Schleife bezogener Energie versorgt. Die Steuereinheit SE wird auch während über eine Spannungswandler SW mit elektrischer Energie, d.h. einer Versorgungsspannung, hier mit Spannungspegel V2, versorgt.

Der Spannungswandler SW, genauer Gleichspannungswandler, kann bspw. während es Startens des Prozessgerätes durch einen Sanftanlauf, zu englisch: soft-start, in Betrieb genommen werden. Ferner kann ein sog. Power On Reset vorgesehen sein, durch den ein Neustart oder ein Abschaltung der Steuereinheit SE erfolgen kann, wenn bspw. die Versorgungsspannung der Steuereinheit SE unter eine vorgegebene Mindestspannung, die bspw. zum sicheren Betreiben der Steuereinheit SE vorliegen muss, vorliegt. Wenn ein solches Reset-Signal vorliegt, kann die Steuereinheit SE somit nicht mehr ein Steuersignal CS, das bspw. als Referenzsignal dient, um den Strom in der Zwei-Leiter-Schleife 2L einzustellen ausgeben und somit geht die Kontrolle über den in der Zwei-Leiter-Schleife 2L eingestellten Strom verloren, was dazu führt dass ein beliebiger nicht bekannter Wert des Stroms und/oder der Spannung in der Stromschleife 2L vorliegt. Zudem kann sich ein Strom und/oder Spannungwert auf der Zwei-Draht -Schleife 2L einstellen, der falsch ist oder nicht den tatsächlichen an der Prozessvorrichtung vorliegenden Umständen entspricht.

Figur 2 zeigt eine Ausführungsform der vorgeschlagenen Erfindung. Eine Eingangsschaltung, die ein Stellglied SG, zum Stellen, Beziehen und/oder Einprägen eines Stroms und/oder einer Spannung in der Zwei-Leiter-Schleife 2L dient.

Ferner ist neben den in Zusammenhang mit Figur 1 beschriebenen Bauteilen auch ein Spannungsregler SR in Form eines sog. Low-Dropout-Regulators vorgesehen, der falls er ausgeschaltet wird, die Spannungsversorgung der Steuereinheit SE unterbricht. Dafür kann ein Steuersignal LC zum Steuern diese Spannungsreglers SE verwendet werden, welches von einer Überwachungseinheit PM ausgegeben wird.

Die Überwachungseinheit PM kann die Spannung und/oder den Strom an den Punkten V1, V2, V3 messen und in Abhängigkeit einer oder mehrerer dieser Spannungen das Steuersignal LC ausgeben. Ferner dient die Überwachungseinheit PM dazu, den Strom bzw. die Spannung, welche(r) in der Zwei-Leiter-Schleife 2L eingestellt wird, vorzugeben.

Die Überwachungseinheit PM selbst wird durch eine bei V2 abgegriffene Spannung mit elektrischer Energie versorgt. Diese bei V2 abgegriffene Spannung kann ferner an den Spannungs- bzw. Strombedarf der Überwachungseinheit PM angepasst werden.

Während der Startvorgangs der Prozessvorrichtung bzw. der Betriebselektronik E wird der Betrieb der Überwachungseinheit PM aufgenommen, sobald der Spannungswandler SW geladen ist. Währenddessen ist wird die Steuereinheit SE noch nicht mit elektrischer Energie versorgt, das der Spannungswandler SW außer Betrieb ist, das heißt die Spannungsversorgung der Steuereinheit SE unterbrochen ist.

Der Strom in der Zwei-Draht-Schleife 2L wird somit nach dem Start der Prozessvorrichtung von der Überwachungseinheit, die sich in einem entsprechenden Betriebsmodus befindet, der dem o.g zweiten Betriebsmodus entspricht. In diesem Betriebsmodus wird der Strom in der Stromschleife alleinig und ausschließlich durch die Überwachungseinheit PM in der Stromschleife, also unabhängig von der Steuereinheit SE bzw. einem von der Steuereinheit SE zu diesem Zeitpunkt ausgegebenen Steuerungssignals oder Steuerkommandos CS, eingestellt. Vielmehr wird von der Überwachungseinheit PM ein bspw. in der Überwachungseinheit PM gespeichertes Signal CS1 bspw. in Form eines pulsweitenmodulierten Signals an das Stellglied SG weiter- bzw. ausgegeben.

Ferner kontrolliert bzw. steuert die Überwachungseinheit PM, die auch Power-Management-Einheit, bezeichnet werden die über eine gewisse Intelligenz zur Steuerung der Leistungsaufnahme der Prozessvorrichtung bzw. der Betriebselektronik E bzw. der Steuereinheit SE aus der Zwei-Draht-Schleife 2L verfügt.

Die Überwachungseinheit PM kontrolliert den Strom in der Zwei-Draht-Leitung 2L bspw. durch Messen des Spannungspegels V1 bzw. am Punkt V1. Ferner kontrolliert bzw. steuert die Überwachungseinheit PM die Eingangsspannung am (Gleich- )Spannungswandler SW durch Messen der Spannung am Punkt V1 bzw. des Spannungspegels V1. Die Eingangsspannung am Spannungswandler kann somit derart gesteuert werden, um der Steuereinheit SE genügend elektrische Energie in Form von Strom und/oder Spannung bereit zu stellen. Durch das messen der Spannung am Punkt V2 bzw. des Spannungspegels V2 kann die Überwachungseinheit PM ein Steuersignal LC zum Steuern des Spannungsreglers SR ausgeben, und somit wenn der Spannungswandler SW einen Betriebszustand erreicht hat, bspw. wenn der Spannungswandler SW geladen ist, die Spannungsversorgung der Steuereinheit SE beginnen bzw. steuern, insbesondere wenn der Spannungswandler SW einen sicheren Betriebszustand erreicht hat. Der Spannungsregler SR kann dann eine Versorgungsspannung zur Versorgung der Steuereinheit SE mit elektrischer Energie ausgeben.

Während des Betriebs der Steuereinheit SE wird durch die Überwachungseinheit PM zudem die Spannung am Punkt V3 bzw. der Spannungspegel V3 gemessen. Die Überwachungseinheit PM kann auch in Abhängigkeit dieser Spannung V3 ein entsprechendes Steuersignal LC an den Spannungsregler SR ausgeben, der die Spannungsversorgung der Steuereinheit SE regelt und auch unterbrechen kann. Dadurch kann bspw. ein Spannungsabfall im Bereich der Steuereinheit SE der bspw. durch einen erhöhten Strombedarf der Steuereinheit SE, durch eine besonders leistungsintensive Anwendung ausgelöst wird, entsprechend abgefangen werden.

Dies kann bspw. erfolgen, indem die Spannungsversorgung der Steuereinheit SE unterbrochen wird, indem von der Überwachungseinheit PM das Steuersignal LC ausgegeben wird, bspw. eingestellt wird, um den Spannungsregler so einzustellen, dass die Spannungsversorgung der Steuereinheit SE unterbrochen wird. Dadurch wird gewährleistet, dass der Überwachungseinheit PM stets genügend Strom bzw. Spannung für ihren eigenen Betrieb bereit steht, so dass die Überwachungseinheit PM anstelle der Steuereinheit SE ein Steuersignal CS1 bzw. zum Einstellen einer Spannung und/oder eines Strom auf der Zwei-Draht-Schleife 2L ausgibt. Denn die Überwachungseinheit PM wird ja bspw. durch die Spannungsversorgung am Punkt V2 bzw. der Spannungspegel V2 dort mit elektrischer Energie versorgt.

Sobald die Steuereinheit SE in Betrieb, d.h. aktiv, ist übergibt die Überwachungseinheit PM die Steuerung bzw. Kontrolle des in der Zwei-Draht-Schleife 2L eingestellten Strom- bzw. Spannungswerts an die Steuereinheit SE. Die Überwachungseinheit PM wirkt dann wie bzw. dient dann als Auffangregister. Während des Normalbetriebs, d.h. dem o.g. ersten Betriebsmodus, ist die Überwachungseinheit PM transparent für das von der Steuereinheit SE ausgegebene Steuersignal CS und die Steuereinheit SE kontrolliert dann direkt (jedoch immer noch über die Überwachungseinheit PM) den Strom bzw. die in der Zwei-Leiter-Schleife 2L eingestellte Spannung, wohingegen während des Startens der Prozessvorrichtung oder in einem Fehlerfall, wie bspw. einem Spannungsabfall in der Betriebselektronik E, die Überwachungseinheit PM die Steuerung des in der Zwei-Leiter-Schleife 2L eingestellten Signals übernimmt.

Die Überwachungseinheit PM stellt dann ein vorgegebenen Spannungs- und/oder Stromwert in der Zwei-Leiter-Schleife 2L ein bzw. stellt ein solches Signal an entsprechenden Anschlüssen der Prozessvorrichtung bereit. Alternativ kann der zuletzt, d.h. vor bspw. dem Fehlerfall wie bspw. einem Spannungsabfall an einem der Punkte V1, V2, V3, vorgegebene Strom und/oder Spannungswert in der Zwei-Leiter-Schleife 2L vermittels der Überwachungseinheit PM eingestellt werden.

Ferner kann die Überwachungseinheit PM den Strom- und/oder Spannungswert in der Zwei-Leiter-Schleife 2L auch im Falle eines Spannungsabfalls in der Zwei-Leiter-Schleife 2L selbst übernehmen und bspw. die Spannungsversorgung der Steuereinheit SE unterbrechen.

Die Eingangsschaltung ES kann bspw. in Form eines ASIC ausgeführt sein. Die Steuereinheit SE kann bspw. ein Mikroprozessor sein, der die Funktionen und/oder Funktionalitäten der Prozessvorrichtung wie bspw. die eines Feldgerätes oder eines Messgerätes ausführt.

Somit wird ein Unterbruch oder eine Änderung insbesondere eine unbestimmte und unkontrollierte Änderung, des in der Zwei-Leiter-Schleife 2L eingestellten Stroms bzw. Spannung vermieden.

Die in Zusammenhang mit Figur 1 genannten Eigenschaften und Betriebsarten sind auch auf das in Figur 2 gezeigte Ausführungsbeispiel zu lesen.

### Bezugszeichenliste

- 2L: Zwei-Draht-Schleife
- SG: Stellglied
- E: Betriebselektronik
- SB: Nebenschluss
- V1: Abgriffpunkt/Spannungspegel
- V2: Abgriffpunkt/Spannungspegel
- V3: Abgriffpunkt/Spannungspegel
- SW: Spannungswandler
- R: Schalteinheit (Power On Reset)
- RS: Schaltsignal für Schalteinheit
- SE: Steuereinheit
- CS: Steuersignal der Steuereinheit
- S1: Abgriffspunkt für V1
- S2: Abgriffspunkt für V2
- S3: Abgriffspunkt für V3
- CS1: Steuersignal der Überwachungseinheit
- SR: Spannungsregler
- PM: Überwachungseinheit
- ES: Eingangsschaltung

## Patentansprüche

1. Betriebselektronik (E) für eine Zwei-Leiter-Prozessvorrichtung,
welche Zwei-Leiter-Prozessvorrichtung an eine Zwei-Leiter-Schleife (2L) anschliessbar ist, wobei die Betriebselektronik (E) eine Eingangsschaltung (ES) und eine mit der Eingangsschaltung (ES) verbundene Steuereinheit aufweist,
wobei die Eingangsschaltung (ES) in einem ersten Betriebsmodus dazu dient, vermittels eines von der Steuereinheit (SE) ausgegebenen Steuersignals (CS) einen Strom und/oder eine Spannung in der Zwei-Leiter-Schleife (2L) einzustellen,
wobei die Eingangsschaltung (ES) in einem zweiten Betriebsmodus dazu dient, selbstständig, unabhängig von der Steuereinheit (SE) bzw. von dem von der Steuereinheit (SE) ausgegebene Steuersignal (CS), den Strom und/oder die elektrische Spannung in der Zwei-Leiter-Schleife (2L) einzustellen und/oder aus der Zwei-Leiter-Schleife zu beziehen,
wobei die Eingangsschaltung ein Stellglied (SG) und eine Überwachungseinheit (PM) umfasst, wobei das Stellglied (SG) zum Einstellen des Stroms und/oder der Spannung in der Zwei-Leiter-Schleife (2L) dient, wobei die Überwachungseinheit (PM) zum Empfangen des Steuersignals (CS) von der Steuereinheit dient,
wobei die Steuereinheit (SE) zumindest zeitweise, bspw. im ersten Betriebsmodus, elektrisch über die Überwachungseinheit (PM) mit dem Stellglied verbunden ist,
wobei die Versorgungsspannung (V1) zwischen dem Stellglied und der Überwachungseinheit einen ersten Wert aufweist, und
wobei zwischen dem Stellglied (SG) und der Überwachungseinheit (PM) ein Nebenschluss (SB) vorgesehen ist, der dazu dient, eine Versorgungsspannung mit einem ersten Wert (V1) bereit zu stellen,
wobei die Eingangsschaltung (ES) ferner einen Spannungswandler (SW) umfasst, der dazu dient, die von dem Stellglied (SG) aufgenommen Versorgungsspannung auf einen zweiten Wert (V2) zu wandeln,
wobei die Versorgungsspannung zwischen dem Spannungsregler (SR) und der Steuereinheit (SE) einen dritten Wert (V3) aufweist, und
wobei der Betriebsmodus der Eingangsschaltung (ES) in Abhängigkeit des Steuersignals (CS) der Steuereinheit (ES) und in Abhängigkeit eines Werts der Versorgungsspannung (V1, V2, V3) der Steuereinheit (E), insbesondere vermittels der Überwachungseinheit (PM), bestimmt wird, wobei die Überwachungseinheit (PM) dazu dient, anhand des ersten, des zweiten und des dritten Werts der Versorgungsspannung (V3) den ersten und/oder den zweiten Betriebsmodus zu bestimmen.

2. Betriebselektronik (E) nach einem der vorherigen Ansprüche,
wobei es sich bei der Eingangsschaltung um ein Leistungsmodul, zur Versorgung der Betriebselektronik (E), insbesondere der Steuereinheit (ES) mit elektrischer Energie, und/oder ein Kommunikationsmodul zur Herstellung einer Kommunikation der Betriebselektronik (E), insbesondere der Steuereinheit (ES), über die Zwei-Draht-Schleife (2L), vorzugsweise zu einer übergeordneten Einheit oder einer anderen Prozessvorrichtung, handelt.

3. Betriebselektronik (E) nach einem der vorherigen Ansprüche,
und wobei durch die Überwachungseinheit (PM), der Betriebsmodus der Eingangsschaltung (ES) bestimmt wird.

4. Betriebselektronik nach einem der vorherigen Ansprüche,
wobei die Eingangsschaltung (ES) ferner einen Spannungsregler (SR), insbesondere eine Schalteinheit, umfasst, die zum Regeln und/oder zum Unterbrechen der Spannungsversorgung der Steuereinheit (SR) dient, insbesondere zum Unterbrechen der Versorgungsspannung mit der die Steuereinheit (SR) mit elektrischer Energie versorgt wird.

5. Betriebselektronik (E) nach einem der vorherigen Ansprüche,
wobei der Strom und/oder die Spannung, die vermittels des Stellglieds (SG) aus der Zwei-Leiter-Schleife entnommen wird bzw. in der Zwei-Leiter-Schleife (2L) eingestellt wird, vermittels eines von der Überwachungsschaltung (PM) vorgegebenen, bspw. pulsweitenmodulierten, Signals (CS1), bspw. sowohl während des ersten als auch während des zweites Betriebsmodus, eingestellt wird,
wobei im ersten Betriebsmodus ein das Steuersignal (CS) oder das Steuerkommando repräsentierender Stromwert und/oder Spannungswert in der Zwei-Leiter-Schleife (2L) vermittels der Eingangsschaltung (ES), bspw. eines PWM-Signals, besonders bevorzugt der Überwachungseinheit (PM), eingestellt wird, und/oder
wobei im zweiten Betriebsmodus ein vorgegebener und in der Eingangsschaltung (ES), vorzugsweise der Überwachungseinheit (PM), hinterlegter Stromwert und/oder Spannungswert in der Zwei-Leiter-Schleife (2L), bspw. anhand eines PWM-Signals, eingestellt wird.

6. Betriebselektronik (E) nach einem der vorherigen Ansprüche,
wobei es sich bei dem von der Eingangsschaltung (ES), insbesondere der Überwachungseinheit, im zweiten Betriebsmodus ausgegebenen, eingestellten bzw. bezogenen Stromwert und/oder Spannungswert um ein Fehlersignal oder Alarmsignal handelt,
wobei es sich bei dem von der Eingangsschaltung (ES), insbesondere der Überwachungseinheit (PM), im zweiten Betriebsmodus ausgegebenen, eingestellten bzw. bezogenen Stromwert und/oder Spannungswert um einen zuletzt das von der Steuereinheit (SE) ausgegebene Steuersignal repräsentierenden Stromwert und/oder Spannungswert handelt, und/oder wobei im zweiten Betriebsmodus ein Strom und/oder eine Spannung in der Zwei-Leiter-Schleife (2L) entsprechend dem Strom und/oder Spannungswert bzw. dem Steuersignal, das in einem vorzugsweise unmittelbar vorhergehenden ersten Betriebsmodus eingestellt wurde, der dem zweiten Betriebsmodus vorrausging, eingestellt wird.

7. Betriebselektronik (E) nach einem der vorherigen Ansprüche,
wobei in dem Fall, dass eine der Versorgungsspannungen einen vorgegebenen Schwellwert überschreitet bzw. unterschreitet, die Überwachungseinheit (PM) die Spannungsversorgung der Steuereinheit (SE), insbesondere vermittels des Spannungsreglers (SR), bei dem es sich bevorzugt um eine Schalteinheit handelt, unterbricht und den zweiten Betriebsmodus auslöst, wobei der zweite Betriebsmodus eine vorgegebene Zeitspanne von der Überwachungseinheit gehalten wird, und/oder
wobei der zweite Betriebsmodus solange gehalten wird, wie die Versorgungsspannung einen vorgegebenen Schwellwert über- oder unterschreitet.

8. Betriebselektronik (E) nach einem der vorherigen Ansprüche,
wobei bei der Inbetriebnahme oder bei einem Neustart des Prozessgerätes die Eingangsschaltung (ES) sich in dem zweiten Betriebsmodus befindet bzw. in dem zweiten Betriebsmodus betrieben wird, bis die Versorgungsspannung, vorzugsweise zwischen der Eingangsschaltung und der Steuereinheit (SE) bzw zwischen dem Spannungswandler (SW) und dem Spannungsregler (SR), zur Versorgung de 17 ereinheit (SE) einen vorgegebenen Schwellwert erreicht hat,
wobei nachdem die Versorgungsspannung den vorgegebenen Schwellwert zum Betreiben der Steuereinheit (SE) erreicht hat, die Eingangsschaltung (ES) in dem ersten Betriebsmodus betrieben wird, und/oder
wobei die Eingangsschaltung (ES), insbesondere die Überwachungseinheit einen Puffer aufweist indem wenigstens ein von der Steuereinheit (SE) gesendetes Steuersignal (CS), bzw. ein dieses Steuersignal (CS) repräsentierender Wert gespeichert ist, und
wobei die Überwachungsschaltung (PM) das Stellglied (SG) derart ansteuert, dass ein Stromwert und/oder ein Spanungswert in der Zwei-Leiter-Schleife (2L) eingestellt wird, der dem in dem Puffer befindlichen Wert entspricht.

9. Prozessvorrichtung, insbesondere Messgerät, der Prozessautomatisierungstechnik mit einer Mess- und/oder Betriebselektronik (E) nach einem der vorherigen Ansprüche.

10. Verfahren zum Betreiben einer Prozessvorrichtung nach Anspruch 9.

## Claims

1. Operating electronics (E) for a two-wire process apparatus,
wherein said two-wire process apparatus can be connected to a two-wire loop (2L),
wherein the operating electronics (E) have an input circuit (ES) and a control unit connected to the input circuit (ES),
wherein, in a first operating mode, the input circuit (ES) is designed to regulate a current and/or a voltage in the two-wire loop (2L) via a control signal (CS) emitted by the control unit (SE),
wherein, in a second operating mode, the input circuit (ES) is designed to regulate the current and/or the electric voltage in the two-wire loop (2L), and/or draw the current and/or the electric voltage out of the two-wire loop, independently of the control unit (SE) or of the control signal (CS) output by the control unit (SE), wherein the input circuit comprises an actuator (SG) and a monitoring unit (PM), wherein the actuator (SG) is designed to regulate the current and/or the voltage in the two-wire loop (2L), wherein the monitoring unit (PM) is designed to receive the control signal (CS) from the control unit,
wherein the control unit (SE) is electrically connected, at least temporarily, for example in the first operating mode, with the actuator via the monitoring unit (PM), wherein the supply voltage (V1) has a first value between the actuator and the monitoring unit, and
wherein a shunt (SB) is provided between the actuator (SG) and the monitoring unit (PM), said shunt being designed to provide a supply voltage with a first value (V1),
wherein the input circuit (ES) further comprises a voltage converter (SW), which is designed to convert the supply voltage taken by the actuator to a second value (V2),
wherein the supply voltage between the voltage regulator (SR) and the control unit (SE) has a third value (V3), and
wherein the operating mode of the input circuit (ES) is determined as a function of the control signal (CS) of the control unit (ES) and as a function of a value of the supply voltage (V1, V2, V3) of the control unit (E), particularly by means of the monitoring unit (PM),
wherein the monitoring unit (PM) is designed to determine the first and/or second operating mode using the first, the second and the third value of the supply voltage (V1, V2, V3).

2. Operating electronics (E) as claimed in the previous claim,
wherein the input circuit is a power module designed to supply energy to the operating electronics (E), particularly the control unit (ES), and/or a communication module designed to establish communication of the operating electronics (E), particularly of the control unit (ES), via the two-wire loop (2L), preferably communication with a higher-level unit or another process apparatus.

3. Operating electronics (E) as claimed in one of the previous claims,
wherein the operating mode of the input circuit (ES) is defined by the monitoring unit (PM).

4. Operating electronics (E) as claimed in one of the previous claims,
wherein the input circuit (ES) further comprises a voltage regulator (SR), particularly a switching unit, which is used to regulate and/or interrupt the supply voltage of the control unit (SR), particularly for the interruption of the supply voltage with which the control unit (SR) is powered with electrical energy.

5. Operating electronics (E) as claimed in one of the previous claims,
wherein the current and/or the voltage, which is taken from the two-wire loop by means of the actuator (SG) or which is regulated in the two-wire loop (2L), is regulated by a signal (CS1), e.g. a pulse-width modulated signal, predefined by the monitoring circuit (PM), for example both during the first and during the second operating mode,
wherein, in the first operating mode, a current value and/or a voltage value representing the control signal (CS) or the control command in the two-wire loop (2L) is regulated by means of the input circuit (ES), for example a PWM signal, particularly preferably by means of the monitoring unit (PM), and/or
wherein, in the second operating mode, a predefined current value and/or voltage value is saved in the input circuit (ES), preferably in the monitoring unit (PM), is regulated in the two-wire loop (2L), for example using a PWM signal.

6. Operating electronics (E) as claimed in one of the previous claims,
wherein the current value and/or the voltage value output, regulated or taken by the input circuit (ES), particularly the monitoring unit (PM), during the second operating mode, is an error signal or an alarm signal,
wherein the current value and/or the voltage value output, regulated or taken by the input circuit (ES), particularly the monitoring unit (PM), during the second operating mode, is a current value and/or a voltage value representing the control signal last emitted by the control unit (SE), and/or
wherein, in the second operating mode, a current and/or a voltage is regulated in the two-wire loop (2L) as a function of the current value and/or of the voltage value, or the control signal which was regulated in a first operating mode, preferably an immediately preceding first operating mode, said first mode preceding the second operating mode.

7. Operating electronics (E) as claimed in one of the previous claims,
wherein, in the event that one of the supply voltages exceeds or drops below a predefined threshold, the monitoring unit (PM) interrupts the supply voltage to the control unit (SE), particularly by means of the voltage regulator (SR), which is preferably a switching unit, and triggers the second operating mode, wherein the second operating mode is maintained for a predefined time by the monitoring unit, and/or
wherein the second operating mode is maintained for as long as the supply voltage exceeds or drops below the predefined threshold.

8. Operating electronics (E) as claimed in one of the previous claims,
wherein, during commissioning or a restart of the process device, the input circuit (ES) is in the second operating mode or is operated in the second operating mode, until the supply voltage, preferably between the input circuit and the control unit (SE) or between the voltage converter (SW) and the voltage regulator (SR), has reached a predefined threshold for the supply of power to the control unit (SE),
wherein after the supply voltage has reached the predefined threshold for the operation of the control unit (SE), the input circuit (ES) is operated in the first operating mode, and/or
wherein the input circuit (ES), particularly the monitoring unit, has a buffer in which at least one control signal (CS) sent by the control unit (SE), or a value representing this control signal (CS), is saved and
wherein the monitoring circuit (PM) actuates the actuator (SG) in such a way that a current value and/or a voltage value is regulated in the two-wire loop (2L), said value corresponding to the value located in the buffer.

9. Process apparatus, particularly a measuring device, used in process automation engineering with a measuring and/or operating electronics unit (E) as claimed in one of the previous claims.

10. Procedure for the operation of a process apparatus as claimed in Claim 9.

## Revendications

1. Électronique d'exploitation (E) destinée à un dispositif de process 2 fils,
lequel dispositif de process 2 fils peut être raccordé à une boucle 2 fils (2L), l'électronique d'exploitation (E) comprenant un circuit d'entrée (ES) et une unité de commande reliée avec le circuit d'entrée (ES),
le circuit d'entrée (ES) étant destiné, dans un premier mode de fonctionnement, à régler, au moyen d'un signal de commande (CS) émis par l'unité de commande (SE), un courant et/ou une tension dans la boucle 2 fils (2L),
le circuit d'entrée (ES) étant destiné, dans un deuxième mode de fonctionnement, indépendamment de l'unité de commande (SE) ou du signal de commande (CS) émis par l'unité de commande (SE), à régler le courant et/ou la tension électrique dans la boucle 2 fils (2L) et/ou à prélever le courant et/ou la tension électrique à partir de la boucle 2 fils (2L),
le circuit d'entrée comprenant un organe de réglage (SG) et une unité de surveillance (PM), l'organe de réglage (SG) étant destiné au réglage du courant et/ou de la tension dans la boucle de courant 2 fils (2L), l'unité de surveillance (PM) étant destinée à la réception du signal de commande (CS) provenant de l'unité de commande,
l'unité de commande (SE) étant reliée, au moins temporairement, par exemple dans un premier mode de fonctionnement, électriquement via l'unité de surveillance (PM) avec l'organe de réglage,
la tension d'alimentation (V1) présentant entre l'organe de réglage et l'unité de surveillance une premier valeur, et
un circuit dérivé (SB) étant prévu entre l'organe de réglage (SG) et l'unité de surveillance (PM), lequel circuit est destiné à mettre à disposition une tension d'alimentation avec une première valeur (V1),
le circuit d'entrée (ES) comprenant en outre un convertisseur de tension (SW), lequel est destiné à convertir la tension d'alimentation appliquée aux bornes de l'organe de réglage en une deuxième valeur (V2),
la tension d'alimentation entre le régulateur de tension (SR) et l'unité de commande (SE) présentant une troisième valeur (V3), et
le mode de fonctionnement du circuit d'entrée (ES) étant déterminé en fonction du signal de commande (CS) de l'unité de commande (ES) et en fonction d'une valeur de la tension d'alimentation (V1, V2, V3) de l'unité de commande (E), notamment au moyen de l'unité de surveillance (PM),
l'unité de surveillance (PM) étant destinée, au moyen de la première, de la deuxième et de la troisième valeur de la tension d'alimentation (V1, V2, V3), à déterminer le premier et/ou le deuxième mode de fonctionnement.

2. Électronique d'exploitation (E) selon la revendication précédente,
pour laquelle il s'agit, concernant le circuit d'entrée, d'un module de puissance destiné à l'alimentation en énergie électrique de l'électronique d'exploitation (E), notamment de l'unité de commande (ES), et/ou d'un module de communication destiné à l'établissement d'une communication de l'électronique d'exploitation (E), notamment de l'unité de commande (ES), par l'intermédiaire de la boucle 2 fils (2L), de préférence avec une unité maître ou un autre dispositif de process.

3. Électronique d'exploitation (E) selon l'une des revendications précédentes,
pour laquelle le mode de fonctionnement du circuit d'entrée (ES) est défini par l'unité de surveillance (PM).

4. Électronique d'exploitation (E) selon l'une des revendications précédentes,
pour laquelle le circuit d'entrée (ES) comprend en outre un régulateur de tension (SR), notamment une unité de commutation, laquelle est destinée à la régulation et/ou à l'interruption de la tension d'alimentation de l'unité de commande (SR), notamment à l'interruption de la tension d'alimentation avec laquelle l'unité de commande (SR) est alimentée en énergie électrique.

5. Électronique d'exploitation (E) selon l'une des revendications précédentes,
pour laquelle le courant et/ou la tension, qui est prélevé(e) au moyen de l'organe de réglage (SG) à partir de la boucle 2 fils ou qui est réglé dans la boucle 2 fils (2L), est réglé(e) au moyen du signal (CS1), par exemple modulé en largeur d'impulsion, prédéfini par le circuit de surveillance (PM), par exemple aussi bien pendant le premier que pendant le deuxième mode de fonctionnement,
une valeur de courant et/ou une valeur de tension représentant, dans le premier mode de fonctionnement, le signal de commande (CS) ou l'instruction de commande dans la boucle 2 fils (2L) au moyen du circuit d'entrée (ES), par exemple un signal PWM, particulièrement de préférence de l'unité de surveillance (PM), et/ou
une valeur de courant et/ou une valeur de tension prédéfini(e) dans le deuxième mode de fonctionnement et enregistré(e) dans le circuit d'entrée (ES), de préférence dans l'unité de surveillance (PM), est réglé(e) dans la boucle 2 fils (2L), par exemple au moyen d'un signal PWM

6. Électronique d'exploitation (E) selon l'une des revendications précédentes,
pour laquelle il s'agit, concernant la valeur de courant et/ou la valeur de tension réglée ou prélevée par le circuit d'entrée (ES), notamment l'unité de surveillance (PM), émise dans le deuxième mode de fonctionnement, d'un signal de défaut ou d'un signal d'alarme,
pour laquelle il s'agit, concernant la valeur de courant et/ou la valeur de tension réglée ou prélevée par le circuit d'entrée (ES), notamment l'unité de surveillance (PM), émise dans le deuxième mode de fonctionnement, d'une valeur de courant et/ou d'une valeur de tension représentant le signal de commande émis en dernier par l'unité de commande (SE), et/ou
pour laquelle, dans le deuxième mode de fonctionnement, un courant et/ou une tension est réglé(e) dans la boucle 2 fils (2L) en fonction de la valeur de courant et/ou de la valeur de tension, ou du signal de commande qui a été réglé dans un premier mode de fonctionnement, de préférence immédiatement précédent, lequel premier mode précédait le deuxième mode de fonctionnement.

7. Électronique d'exploitation (E) selon l'une des revendications précédentes,
pour laquelle, dans le cas où l'une des tensions d'alimentation dépasse par excès ou par défaut un seuil prédéfini, l'unité de surveillance (PM) interrompt l'alimentation en tension de l'unité de commande (SE), notamment au moyen du régulateur de tension (SR), pour lequel il s'agit de préférence d'une unité de commutation, et déclenche le deuxième mode de fonctionnement, le deuxième mode de fonctionnement étant maintenu pendant une durée prédéfinie par l'unité de surveillance, et/ou
le deuxième mode de fonctionnement étant maintenu aussi longtemps que la tension d'alimentation dépasse par excès ou par défaut un seuil prédéfini.

8. Électronique d'exploitation (E) selon l'une des revendications précédentes,
pour laquelle, lors de la mise en service ou lors d'un redémarrage de l'appareil de process, le circuit d'entrée (ES) est dans le deuxième mode de fonctionnement ou est utilisé dans le deuxième mode de fonctionnement, jusqu'à ce que la tension d'alimentation, de préférence entre le circuit d'entrée et l'unité de commande (SE) ou entre le convertisseur de tension (SW) et le régulateur de tension (SR), a atteint un seuil prédéfini pour l'alimentation de l'unité de commande (SE),
le circuit d'entrée (ES), après que la tension d'alimentation ait atteint le seuil prédéfini pour le fonctionnement de l'unité de commande (SE), étant utilisé dans le premier mode de fonctionnement, et/ou
le circuit d'entrée (ES), notamment l'unité de surveillance, comportant un tampon, dans lequel est enregistré au moins un signal de commande (CS) émis par l'unité de commande (SE) ou une valeur représentant ce signal de commande (CS), et le circuit de surveillance (PM) commandant l'organe de réglage (SG) de telle sorte qu'une valeur de courant et/ou une valeur de tension est réglée dans la boucle 2 fils (2L), laquelle valeur correspond à la valeur se trouvant dans le tampon.

9. Dispositif de process, notamment un appareil de mesure, de la technique d'automatisation des process, avec une électronique de mesure et/ou d'exploitation (E) selon l'une des revendications précédentes.

10. Procédé destiné à l'exploitation d'un dispositif de process selon la revendication 9.
